# EUROPEAN PATENT APPLICATION

(11) **EP 1 746 748 A2**
(43) Date of publication of application: **24.01.2007**
(21) Application number: 06003678.7
(22) Date of filing: 23.02.2006
(51) Int. Cl.: H04H 1/00

(54) **Packet based retransmission system for DMB service and apparatus therefor**

(30) Priority: 18.07.2005 KR 2005064847
(71) Applicant: Samsung Electronics Co., Ltd., Suwon-si, Gyeonggi-Do (KR)
(72) Inventor: Yoon, Jun, Yeongtong-gu Suwon-si Gyeonggi-do (KR)
(74) Representative: Lang, Johannes

(57) **Abstract**

Disclosed is a packet based retransmission apparatus for a digital multimedia broadcasting (DMB) terminal supporting DMB service. The apparatus includes a DMB receiver for receiving DMB data transmitted through a broadcasting transmission medium; and a DMB transport mode release unit for releasing a DMB transport mode in the DMB data received through the DMB receiver and outputting a Motion Picture Expert Group-2 (MPEG-2) transport stream (TS), a packet data converter for converting the MPEG-2 TS output from the DMB transport mode release unit into packet data with a predetermined format and a packet-based transmitter for transmitting the packet data provided from the packet data converter.

## Description

### BACKGROUND OF THE INVENTION

### 1. Field of the Invention

The present invention relates generally to Digital Multimedia Broadcasting (DMB), and in particular, to a system and apparatus for supporting DMB service in a device not currently capable of supporting the DMB service directly.

### 2. Description of the Related Art

DMB provides multimedia broadcasting service including video, based on a Digital Audio Broadcasting (DAB) Eureka-147 system, which is a European digital radio broadcasting that can simultaneously provide high-quality audio service and video service.

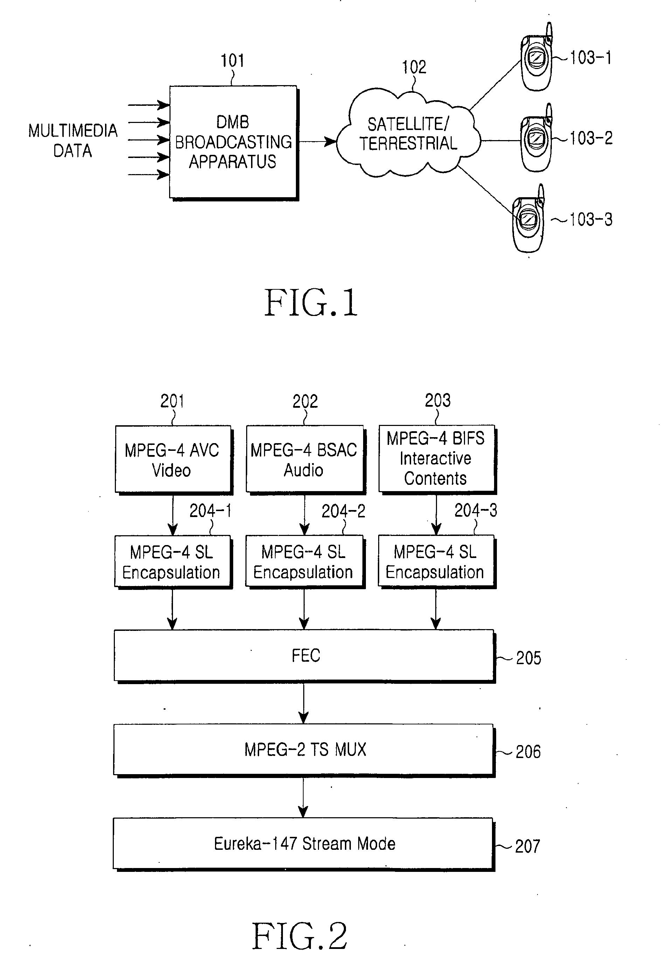

FIG. 1 is a block diagram illustrating an exemplary configuration of a general DMB system.

As illustrated in FIG. 1, a general DMB system includes a DMB broadcasting apparatus 101 for configuring DMB data for DMB transmission using multimedia data created by a content provider and transmitting the DMB data, a satellite/terrestrial 102 which is a delivery medium for delivering the DMB data transmitted from the network DMB broadcasting apparatus 101, and DMB receiving apparatuses 103-1, 103-2, and 103-3 for receiving the DMB data transmitted via the satellite/terrestrial network 102 and outputting the received multimedia data.

The DMB broadcasting apparatus 101 includes a broadcasting center for configuring DMB data for DMB transmission using multimedia data created by a content provider, a transmission apparatus for transmitting the DMB data configured by the broadcasting center, and a gap filler for retransmitting the DMB data to fill DMB shadowed areas which are also referred to as a "gap".

The DMB receiving apparatuses (e.g., 103-1, 103-2, and 103-3) include vehicle DMB terminals and portable DMB terminals.

It is assumed that the DMB system shown in FIG. 1 includes both a satellite DMB system and a terrestrial DMB system, and it's the DMB's delivery medium includes both a satellite and a terrestrial transmitters/receivers.

Conventionally, in DMB system, subscribers must inconveniently prepare their own DMB terminals in order to receive DMB-based multimedia service. Moreover, conventional DMB terminals are expensive. Therefore, there is a demand for a system and apparatus for providing DMB service using existing terminals capable of processing packet type data, such as a wireless local area network (WLAN) terminal, a LAN terminal, and a 3^{rd} generation (3G) terminal supporting a mobile network.

### SUMMARY OF THE INVENTION

It is, therefore, an object of the present invention to provide a packet based retransmission apparatus for DMB service, for providing DMB service to a device not currently capable of receiving DMB service directly by converting DMB data into packet data.

It is another object of the present invention to provide a packet based retransmission system for a DMB service by retransmitting the DMB service over a packet-based network.

According to one aspect of the present invention, there is provided a packet-based retransmission apparatus for a digital multimedia broadcasting (DMB) terminal supporting a DMB service. The apparatus includes a DMB receiver for receiving DMB data transmitted through a broadcasting transmission medium; a DMB transport mode release unit for releasing a DMB transport mode in the DMB data received through the DMB receiver, and outputting a Motion Picture Expert Group-2 (MPEG-2) transport stream (TS); a packet data converter for converting the MPEG-2 TS output from the DMB transport mode release unit into packet data with a predetermined format; and a packet-based transmitter for transmitting the packet data provided from the packet data converter.

According to another aspect of the present invention, there is provided a packet-based retransmission system for Digital Multimedia Broadcasting (DMB) service. The system includes a DMB broadcasting apparatus for configuring DMB data for DMB transmission using multimedia data created by a content provider; a broadcasting delivery medium for delivering the DMB data transmitted from the DMB broadcasting apparatus; a DMB packet data converter for receiving the DMB data transmitted through the broadcasting delivery medium and converting the received DMB data into packet data with a predetermined format; and a packet network for transmitting the packet data provided from the DMB packet-data converter to user receiving devices.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram illustrating an exemplary configuration of a general DMB system;
FIG. 2 is a block diagram illustrating an exemplary hierarchical structure for transmitting DMB data in a DMB system;
FIG. 3 is a block diagram illustrating packet-based retransmission by a DMB terminal in DMB service according to a first embodiment of the present invention;
FIG. 4 is a block diagram illustrating an exemplary retransmission apparatus for packet based retransmission by a DMB terminal in DMB service according to the first embodiment of the present invention; and
FIG. 5 is a block diagram illustrating an exemplary configuration of a packet based retransmission system for DMB service according to a second embodiment of the present invention.

### DETAILED DESCRIPTION OF EXEMPLARY EMBODIMENTS

Several exemplary embodiments of the present invention will now be described in detail with reference to the annexed drawings. In the following description, a detailed description of known functions and configurations incorporated herein has been omitted for clarity and conciseness. Throughout the drawings, like reference numbers should be understood to refer to like elements, features and structures.

FIG. 2 is a block diagram illustrating an exemplary hierarchical structure for transmitting DMB data in a DMB system. With reference to FIG. 2, a description will now be made of a hierarchical structure for transmitting DMB data.

In compression, video data is compressed using a Motion Picture Expert Group-4 (MPEG-4) Part 10 Advanced Video Coding (AVC) 201 scheme (defined in H.264). H.264 refers to the latest technology for guaranteeing the best efficiency and performance among the known moving image compression technologies. In particular, the H.264 technology offers superior performance when compared with other compression technologies in the process of compressing and transmitting DMB data having a low data rate and a small screen size. Therefore, H.264 has been adopted as a video standard for the domestic terrestrial DMB and satellite DMB systems. Audio data (as opposed to video data) is encoded separately using MPEG-4 Bit Sliced Arithmetic Coding (BSAC) 202 for the terrestrial DMB or an Advanced Audio Codec (AAC+) for the satellite DMB. MPEG-4 BSAC 202, one of audio compression technologies, shows compression performance similar to those of other compression technologies including AAC+ and can simply vary a data rate. An embodiment of the present invention will be described with reference to the terrestrial DMB. In addition, data information (as opposed to audio or video data) is compressed into MPEG-4 Binary Format for Scenes (BIFS) Interactive Contents 203. The video, audio, and data information are encapsulated in MPEG-4 synchronization layers (SL) 204-1, 204-2, and 204-3, respectively. The encapsulated information is subject to forward error correction (FEC) 205 for correcting transmission errors. The FEC-processed video, audio and data information are multiplexed into an MPEG-2 transport stream (TS) 206. A format of an MPEG-2 TS packet (not shown) includes a TS packet header and a payload of a packetized elementary stream (PES) packet. In particular, the TS packet header indicates a type of a signal included in a TS packet and includes a packet identifier (PID) field which is used during PES packet decoding in a transmitted TS packet when demultiplexing a transmitted TS packet. The MPEG-2 TS multiplexed data is then packetized into DMB data in a European Research Coordination Agency project-147 (Eureka-147) stream mode 207, which is a DMB transport mode.

Therefore, the present invention proposes an apparatus for releasing a Eureka-147 stream mode 207, encapsulating an MPEG-2 TS to be suitable for a packet based transport protocol and transmitting the encapsulated MPEG-2 TS to a terminal apparatus that can transmit packet based data but cannot receive DMB data (encapsulated in the Eureka-147 stream Mode 207), in order to retransmit the DMB data in a signal based on another protocol. Although multi-protocol label switching (MPLS) is used herein as the packet based data transport protocol, the scope of the present invention is not limited thereto, and an IEEE 1394, Bluetooth, Zigbee, W-LAN and UWB scheme can also be used as a packet based data transport protocol.

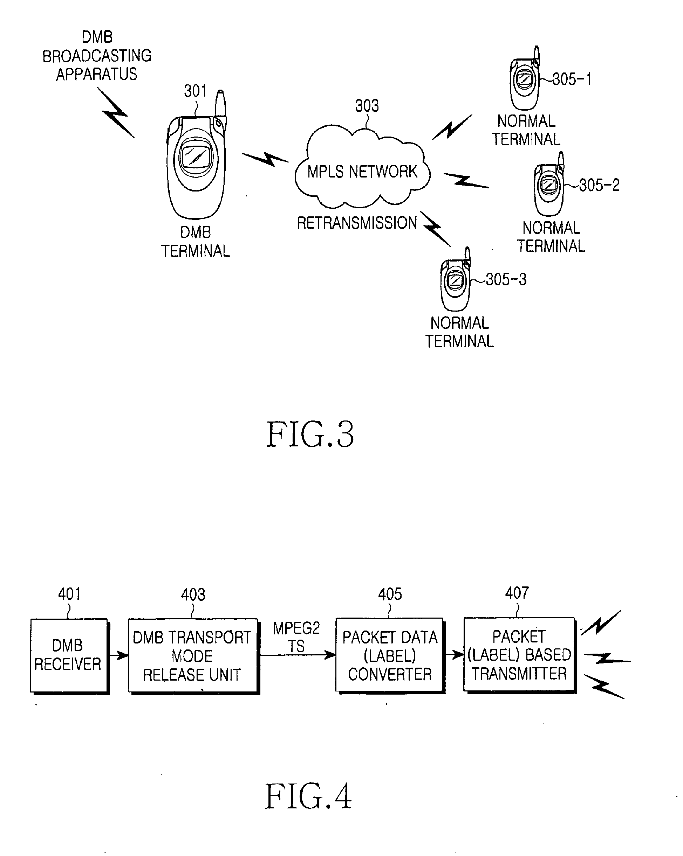

FIG. 3 is a block diagram illustrating packet based retransmission by a DMB terminal in DMB service according to a first embodiment of the present invention. With reference to FIG. 3, a description will now be made of a system in which a DMB terminal retransmits received DMB data to a non-DMB terminal (hereinafter referred to as a "normal terminal"). A DMB terminal 301, receiving DMB data transmitted from a DMB broadcasting apparatus, decapsulates and thereafter encapsulates the received DMB data in the form of MPLS packet data, or encapsulates the received DMB data without decapsulating the received DMB data and retransmits the encapsulated data to normal terminals 305-1, 305-2, and 305-3 that cannot receive DMB data in the Eureka-147 stream mode. Herein, the DMB data can be either the data generated by demodulating digital data into a digital data stream, demultiplexing the demodulated digital data stream into an audio data stream and a video data stream, decoding the audio data stream and the video data stream into analog audio signal and/or analog video signal, and then encoding the analog audio signal and/or analog video signal into the MPEG-2 TS multiplexed data shown in FIG. 2, or the MPEG-2 TS data given before outputting an analog audio signal and/or an analog video signal by demodulating the digital data.

The DMB data encapsulated in the form of the MPLS packet data is retransmitted through an MPLS network 303. The MPLS network 303 simplifies a forwarding function by introducing the connection-oriented concept in a connectionless IP network, and establishes a fixed path, i.e., a label switched path (LSP), from an edge node to another edge node at a call setup time in a fast switching network with an MPLS function, for example, an asynchronous transfer mode (ATM) network. Therefore, actual packet data transmission in the MPLS network is achieved through a previously established LSP.

The MPLS network 303 includes a plurality of nodes, for example, a plurality of edge routers (Ers-not shown) and a plurality of label switch routers (LSRs-not shown). In the MPLS network 303, after a particular LSP is established, each edge router ER performs a process of (i) analyzing a header to determine an LSP to use, and (ii) attaching an LSP identification (ID) indicating a label type to a packet before transmission. After completion of this process, each node, for example Label Switch Routers, performs fast transmission along the LSP depending on the label information attached to the packet.

The LSP establishment will now be described in more detail. Each node performs a label distribution protocol (LDP) operation to establish an LSP to a neighbor node. A particular node performs a negotiation over a label that will use an upstream and a downstream node, for its own forwarding equivalence class (FEC). That is, through the negotiation, a label to be used for an LSP between an upstream node and a particular node (e.g., a downstream node) or between a particular node (e.g., an upstream node) and a downstream node is determined.

A basic method for establishing an LSP will now be given. If an upstream node proposes to negotiate with a downstream node over a label for an LSP for a particular FEC, the downstream node allocates a label for the FEC and informs an upstream peer of the label allocation result. As a result, each node generates a table called label information base (LIB) for performing a mapping function between a label indicating an LSP of a link and an FEC. Each time neighbor information of a particular node is changed, the node establishes an SLP by performing a renegotiation with a newly recognized neighbor node. After an LSP is established by the LDP operation as described above, if a packet from an external network is applied to one of the edge routers ERs in the MPLS network 303, the edge router (commonly called "ingress edge router") (i) analyzes an IP header, (ii) determines an LSP to use according to a destination Internet Protocol (IP) address, (iii) disassembles an IP packet into ATM cells, and (iv) transmits the Asynchronous Transfer Mode (ATM) cells to a peer LSR using a label corresponding to the destination IP address as a VPI/VCI (virtual path identifier)/(virtual channel identifier) value. The LSRs existing in the LSP transmit packets to an egress edge router ER (commonly called "egress edge router") simply by cell switching without packet assembly/disassembly. The egress edge router ER (commonly called "egress edge router)(i) reassembles ATM cells, (ii) analyzes an IP header, and (iii) perfonns Layer 3 forwarding.

FIG. 4 is a block diagram illustrating an exemplary retransmission apparatus for packet based retransmission by a DMB terminal in DMB service according to the first embodiment of the present invention.

With reference to FIG. 4, a description will now be made of a retransmission apparatus for packet based retransmission by a DMB terminal in a DMB service. The packet based retransmission apparatus includes a DMB receiver 401 for receiving DMB data transmitted through a satellite/terrestrial network, a DMB transport mode release unit 403 for releasing a DMB transport mode in the DMB data received through the DMB receiver 401 and outputting an MPEG-2 TS, a packet data converter 405 for converting the MPEG-2 TS output from the DMB transport mode release unit 403 into MPLS packet data, and a packet based transmitter 407 for transmitting the MPLS packet data provided from the packet data converter 405. The packet data converter 405 attaches a new addressing scheme called a label to a head of a packet address for the MPLS packet data.

In addition, the packet based transmitter 407, which can be implemented (as desired) using different methods according to transport protocol or medium. For example, the packet based transmitter 407 can be implemented with an IEEE 1394 interface device, a Bluetooth transmitter, a UWB device (or transmission apparatus), a Zigbee device, or a W-LAN device.

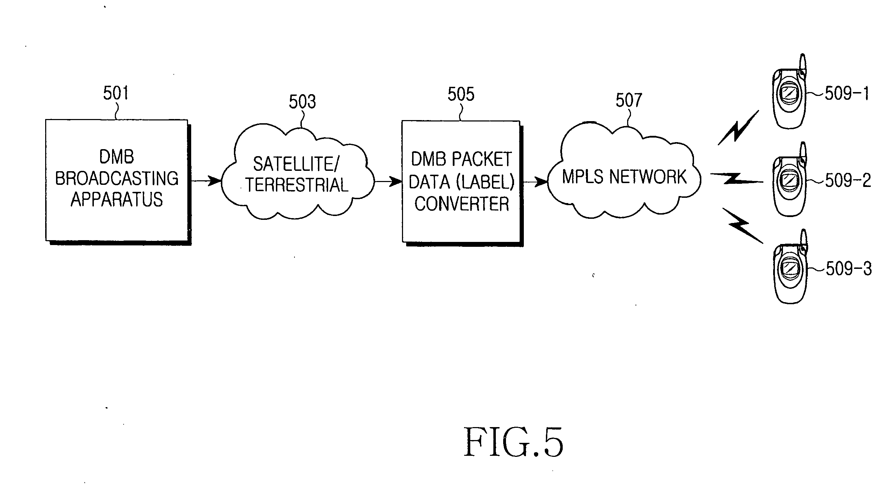

FIG. 5 is a diagram illustrating an exemplary configuration of a packet based retransmission system for DMB service according to a second embodiment of the present invention. Referring to FIG. 5, the packet based retransmission system for DMB service includes a DMB broadcasting apparatus 501 for configuring DMB data for DMB transmission using multimedia data created by a content provider and transmitting the DMB data, a satellite/terrestrial 503 which is a delivery medium for delivering the DMB data transmitted from the DMB broadcasting apparatus 501, a DMB packet data converter 505 for receiving the DMB data transmitted through the satellite/terrestrial network 503 and converting the received DMB data into MPLS packet data, and an MPLS network 507 for outputting the MPLS packet data provided from the DMB packet data converter 505 to user devices 509-1, 509-2, and 509-3.

The DMB broadcasting apparatus 501 includes a broadcasting center for configuring DMB data for DMB transmission using multimedia data created by a content provider, a transmission apparatus for transmitting the DMB data configured by the broadcasting center, and a gap filler for retransmitting the DMB data to DMB shadow areas. The user devices 509-1, 509-2 and 509-3 are DMB terminals capable of receiving DMB data and include all kinds of terminals capable of processing packet based data.

As can be understood from the foregoing description, the present invention provides DMB service to an apparatus incapable of conventionally receiving DMB data, by converting the DMB data into packet based data. In addition, the present invention can transmit DMB data at high-speed by retransmitting the DMB data in the form of the MPLS packet data.

While the invention has been shown and described with reference to a certain preferred embodiment thereof, it will be understood by those skilled in the art that various changes in form and detail may be made therein without departing from the spirit and scope of the invention as defined by the appended claims.

## Claims

1. A packet based retransmission apparatus for a Digital Multimedia Broadcasting (DMB) terminal supporting a DMB service, comprising:
a DMB receiver for receiving DMB data transmitted through a broadcasting transmission medium;
a DMB transport mode release unit for releasing a DMB transport mode in the DMB data received through the DMB receiver, and outputting corresponding data in a Motion Picture Expert Group-2 (MPEG-2) Transport Stream (TS);
a packet data converter for converting the MPEG-2 TS output from the DMB transport mode release unit into packet data with a predetermined format; and
a packet based transmitter for transmitting the packet data provided from the packet data converter.

2. The packet based retransmission apparatus of claim 1, wherein the packet data converter converts the MPEG-2 TS into multi-protocol label switching (MPLS) packet data.

3. The packet based retransmission apparatus of claim 1, wherein the MPEG-2 TS includes data generated by demodulating the received DMB data into a stream, decoding the stream into an analog audio signal and an analog video signal, and multiplexing the at least one of analog audio signal and the analog video signal into multiplexed data.

4. The packet based retransmission apparatus of claim 1, wherein the MPEG-2 TS includes data existing before DMB data received through the broadcasting transmission medium is demodulated into a stream, decoded and output as at least one of an analog audio signal and an analog video signal.

5. The packet based retransmission apparatus of claim 1, wherein the packet based transmitter includes an ultra-wideband (UWB) device.

6. A packet based retransmission system for a digital multimedia broadcasting (DMB) service, comprising:
a DMB broadcasting apparatus for configuring DMB data for DMB transmission using multimedia data created by a content provider;
a broadcasting delivery medium for delivering the DMB data transmitted from the DMB broadcasting apparatus;
a DMB packet data converter for receiving the DMB data transmitted through the broadcasting delivery medium and converting the received DMB data into packet data with a predetermined format; and
a packet network for transmitting the packet data provided from the DMB packet data converter to a plurality of user receiving devices.

7. The packet based retransmission system of claim 6, wherein the packet data converter converts a Motion Picture Expert Group-2 (MPEG-2) Transport Stream (TS) into multi-protocol label switching (MPLS) packet data.

8. The packet based retransmission system of claim 6, wherein the packet network includes an MPLS network.
